# EUROPEAN PATENT APPLICATION

(11) **EP 4 663 493 A1**
(43) Date of publication of application: **17.12.2025**
(21) Application number: 24181038.1
(22) Date of filing: 10.06.2024
(51) Int. Cl.: B60T 15/02, B60T 15/04, B60T 15/36, B60T 17/04

(54) **VALVE UNIT FOR MODULATING PRESSURE IN A PNEUMATIC BRAKING SYSTEM OF A VEHICLE, IN PARTICULAR UTILITY VEHICLE, PNEUMATIC BRAKING SYSTEM, VEHICLE**

(71) Applicant: ZF CV Systems Europe BV, 1170 Brüssel (BE)
(72) Inventor: BIALON, Rafal, 55-200 Godzikowice (PL)
(74) Representative: Schäferjohann, Volker

(57) **Abstract**

Valve unit (100) for modulating pressure in a pneumatic braking system (210) of a vehicle (200a), in particular utility vehicle (200b); wherein the valve unit (100) comprises a first body member (120), a second body member (130) and a control pressure line (110) comprised by at least the first body member (120) and the second body member (130); the valve unit (100) comprises a sealing member (140), wherein the sealing member (140) is arranged between the first body member (120) and the second body member (130) for sealing the control pressure line (110) and an environment (10) from each other; and the second body member (130) comprises a collar section (131), wherein the collar section (131) projects towards the first body member (120), and the collar section (131) is adapted to constrain the arrangement of the sealing member (140).

## Description

The disclosure relates to a valve unit for modulating pressure in a pneumatic braking system of a vehicle, in particular utility vehicle. The disclosure also relates to a pneumatic braking system for a vehicle, in particular utility vehicle, comprising a valve unit, and to a vehicle, in particular utility vehicle, comprising a pneumatic braking system and/or a valve unit.

In other words, the disclosure concerns a valve unit for modulating pressure in a compressed-air brake system, with an inlet valve and an outlet valve configured as diaphragm valves, also called membrane valves, and via which a brake pressure output can be connected to or shut off from a brake pressure input or a vent output, and with two pilot valves configured as 3/2-way solenoid valves, via which a respective control chamber adjacent to the diaphragm, also called membrane, of the assigned diaphragm valve can be pressurized with a control pressure via a control pressure line, wherein the diaphragm valves are arranged with parallel actuation axes and radially adjacent to each other in a valve housing, and the diaphragms of the diaphragm valves are each clamped between two housing parts via a respective ring bead laid in a housing-side ring groove and oriented axially on the pilot valve side.

In compressed-air brake systems of wheeled vehicles, such as motor vehicles and rail vehicles, valve units of the above-mentioned type may be used as brake valves, as relay valves, and as ABS control valves. Such a valve unit has an inlet valve and an outlet valve. Via the inlet valve, a brake pressure output, to which a brake circuit or a brake line leading to a wheel brake cylinder can be connected, can be alternately connected to or shut off from a brake pressure input, to which a brake line coming from a brake valve or relay valve can be connected. Via the outlet valve, the brake pressure output can be alternately connected to or shut off from a vent output which normally leads via a silencer to the environment.

Because of the large volume flows to be switched and correspondingly large flow cross-sections to be opened and closed, the inlet valve and outlet valve are often configured as pneumatically actuatable diaphragm valves, which can be controlled via a respective pilot valve configured as a 3/2-way solenoid valve. A diaphragm valve has a largely circular, disk-like, flexible diaphragm which at its edge is clamped in the valve housing, usually via a ring bead placed in a housing-side ring groove and oriented axially on the pilot valve side, i.e. axially facing the housing part containing the pilot valves.

On the axial inner side of the diaphragm on which the flow channels connected to the compressed air inputs and outputs are arranged, and coaxially to the actuation axis of the respective diaphragm valve, a cylindrical central channel with a circular valve seat facing the diaphragm and an outer ring channel concentric thereto are arranged. On the axially opposite outer side of the diaphragm, a control chamber is arranged which can be pressurized by the assigned pilot valve alternately with a high control pressure normally taken from the brake pressure input, or with a low control pressure, normally corresponding to ambient pressure, taken from the vent output or another point.

When the control chamber is pressurized with the high control pressure, the diaphragm is pressed against the valve seat, whereby the central channel is shut off from the outer ring channel, which corresponds to the closed state of the diaphragm valve concerned. When the control chamber is pressurized with the low control pressure, the diaphragm, which lies automatically on the valve seat due to its shaping and/or a valve spring, is raised from the valve seat by the brake pressure prevailing in the flow channels and displaced in the direction towards the control chamber, whereby the central channel is connected to the ring channel, which corresponds to the open state of the diaphragm valve concerned.

With regard to the geometric arrangement of the compressed air inputs and outputs of the inlet and outlet valves formed as diaphragm valves, and the pilot valves formed as solenoid valves, in a valve housing, valve units are known in which the compressed air inputs and compressed air outputs and diaphragm valves are arranged with parallel actuation axes in a first housing part, also called first body member, while the pilot valves are arranged in a second housing part.

WO 2019/115027 A1 discloses a membrane valve assembly in a valve device of a pneumatic braking system of a motor vehicle, comprising a disc-shaped valve membrane, which consists of a resilient material, and a disc having a central aperture, wherein: the valve membrane is arranged with one of its two sides on the disc; the valve membrane has, radially outwardly, a peripheral sealing bead; the disc, together with the valve membrane, is arranged between a housing upper part and a housing lower part of the membrane valve assembly; the sealing bead is received between the housing upper part and the housing lower part; and the sealing bead has at least one rib radially in the direction of the housing upper part and/or in the direction of the housing lower part.

DE 10 2015 016 265 A1 discloses a valve unit for modulating pressure in a compressed-air brake system, comprising an inlet valve and an outlet valve, which are designed as diaphragm valves and by means of which a brake-pressure outlet can be connected to or shut off from a brake-pressure inlet or a venting outlet, and comprising two pilot valves, which are designed as 3/2-way solenoid valves and by means of which a control pressure can be applied to a control chamber adjoining the diaphragm of the associated diaphragm valve via a control pressure line, wherein the diaphragm valves having with parallel actuation axes are arranged radially adjacent in a valve housing, and the diaphragms of the diaphragm valves are clamped between two housing parts by means of respective ring beads, which are inserted into respective housing-side ring grooves and are oriented axially on the pilot valve side.

The control pressure line is sealed by an o-ring-shaped sealing member, wherein the sealing member is arranged between the first body member and a second body member. However, corrosion products may deform the sealing and/or penetrate under the sealing, e.g., between the first body member and the sealing, and enter the pneumatic control pressure line. This may negatively affect the sealing function of the sealing. The sealing is particularly challenging since construction space between the first body member and the second body member may be highly limited.

It is an object of the present invention to provide a technological contribution and to improve at least one aspect of the prior art. In particular, an object of the invention may be to provide an improved environmental and function sealing for a valve unit with limited construction space.

The object is solved by the subject-matter according to independent claim 1 and according to the remaining independent claims. Dependent claims relate to preferred embodiments.

According to an aspect of the present disclosure, a valve unit for modulating pressure in a pneumatic braking system of a vehicle, in particular utility vehicle, is provided; wherein the valve unit comprises a first body member, a second body member and a control pressure line comprised by at least the first body member and the second body member; the valve unit comprises a sealing member, wherein the sealing member is arranged between the first body member and the second body member for sealing the control pressure line and an environment from each other; and the second body member comprises a collar section, wherein the collar section projects towards the first body member, and the collar section is adapted to constrain the arrangement of the sealing member.

The disclosure suggests integrating the collar section to achieve sealing with an additional movement blocking function to devices with high corrosive environmental loads and very small available construction space. The collar section is adapted to project from the second body member to the first body member. The arrangement and shape of the collar section may constrain the deformation and/or movement of the sealing member. The collar section may achieve that the sealing member remains in a position and keeps a shape that achieves a proper sealing function. Thus, the size of the collar, e.g., the distance over which the collar section projects from the second body member to the first body member may be small, i.e., comparable to the size and/or height of the sealing member. Thus, the collar section achieves, even with highly limited construction space an improved sealing.

Optionally, the collar section is annularly shaped; and the sealing member is radially outwardly arranged from the collar section. The collar section may thus define, by its annular shape, an axis and a radial direction perpendicular to the axis. The arrangement of the sealing member radially outwardly from the collar section prevents the sealing member from moving and/or deforming radially inwardly.

Optionally, the collar section is circumferentially around and radially outwardly arranged from the control pressure line. The arrangement of the sealing member radially outwardly from the collar section and the arrangement of the collar section relative to the control pressure line prevents the sealing member from moving and/or deforming into the control pressure line.

Optionally, the first body member comprises a recess; and the collar section is arranged to project into the recess. The recess and the collar section may radially constrain the movement and/or deformation of the sealing member. Therein, the recess limits a radial outward movement and/or deformation, and the collar section limits a radial inward movement and/or deformation.

Optionally, the first body member comprises a recess; and the sealing member is at least partially arranged within the recess. This embodiment achieves constraining the movement and/or deformation of the sealing member and provides a proper sealing between the first body member and the second body member.

Optionally, the first body member comprises a flange; the flange projects towards the second body member; the flange defines at least two sealing member reception portions; and the sealing member is arranged within the at least two sealing member reception portions. The flange may serve as a wall which may block a corrosion progress due to creeping on a surface of the first body member; the flange prevents a propagation and/or the creeping of corrosion and/or of corrosion products. The flange further enables a broad variety of sealing members with effective sealing properties.

Optionally, the sealing member comprises a C-shaped and/or H-shaped cross-section with a bridge section; and the sealing member is arranged to span the flange with the bridge section. This embodiment enables an inner sealing portion and a second sealing portion with the bridge section therebetween to block the movement of sealing member.

Optionally, the first body member comprises a recess; and the flange is arranged within the recess. This enables an efficient positioning of the sealing member to lock the movement and/or deformation of the sealing member and provides a space-saving possibility for arranging the flange.

Optionally, the flange is radially outwardly arranged from the collar section. Thus, the flange and the collar section may overlap in an axial direction. This may save construction space.

Optionally, the sealing member comprises an inner sealing portion and an outer sealing portion circumferentially around and radially outwardly arranged from the inner sealing portion. In other words, the sealing member comprises a first lip as the outer sealing portion and a second lip as the inner sealing portion. The outer sealing portion may function as an environmental sealing and the inner sealing portion may function to provide pneumatic sealing.

Optionally, the inner sealing portion is, in a radial direction, wider than and the outer sealing portion. This achieves that the pneumatic sealing may withstand higher pressures reliably.

Optionally, the valve unit comprises two membranes; and at least one of the membranes is adapted to be controlled by pressurized air through the control pressure line. The two membranes may be part of an inlet valve and of an outlet valve. The valve unit may thus be controlled by pressurized air in the control pressure line.

Optionally, the valve unit comprises a solenoid valve being functionally connected to the control pressure line. Thus, the valve unit may achieve a further improvement of the functional connection between the solenoid valve further parts of the valve unit, e.g., the membranes.

According to an aspect of the disclosure, a pneumatic braking system of a vehicle, in particular utility vehicle, is provided. The pneumatic braking system comprises the valve unit as described above. Optionally, the valve unit comprises one or more features as described above as optional and/or preferred to achieve a technical effect corresponding thereto.

According to an aspect of the disclosure, vehicle, in particular utility vehicle, is provided. The vehicle, in particular utility vehicle, comprises the pneumatic braking system as described above and/or the valve unit as described above. Optionally, the pneumatic braking system and/or the valve unit comprises one or more features as described above as optional and/or preferred to achieve a technical effect corresponding thereto.

Further advantages and technical features and their technical effects are disclosed in the figures and the description thereof.

The figures show preferred embodiments as follows:
- Fig. 1: a schematic of a vehicle, in particular utility vehicle, according to an embodiment of the disclosure;
- Fig. 2: a schematic of a valve unit according to an embodiment of the disclosure;
- Fig. 3: a top view of parts of a valve unit;
- Fig. 4: details of a section of a plurality of valve units each according to the prior art and according to embodiments of the disclosure; and
- Fig. 5: a top view of parts of a valve unit to an embodiment of the disclosure.

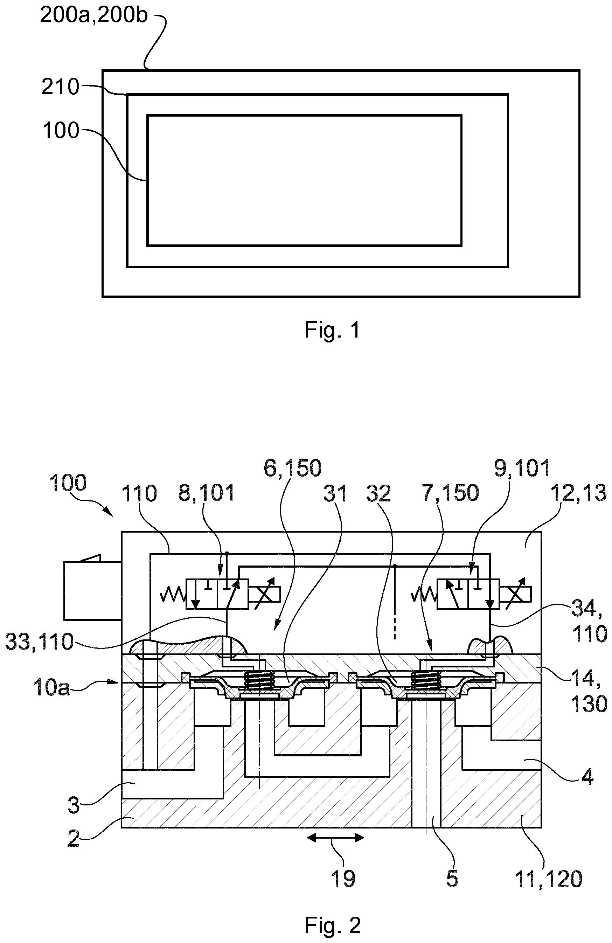

Figure 1 shows a schematic of a vehicle 200a, in particular utility vehicle 200b, according to an embodiment of the invention. In the following, the vehicle 200a, in particular utility vehicle 200b, is referred to as vehicle 200a, 200b. The vehicle 200a, 200b is a land vehicle 200a, 200b. For example, the vehicle 200a, 200b is a truck, a bus, and/or a vehicle of a vehicle combination.

The vehicle 200a, 200b comprises a pneumatic braking system 210. The pneumatic braking system 210 comprises pneumatic and optionally electric components. For example, a brake request by a driver and/or operator of the vehicle 200a, 200b may lead to a brake signal that causes a pneumatic and/or an electro-pneumatic actuation of the pneumatic braking system 210. Therein, pressurized air is provided and controlled to actuate the pneumatic braking system 210 to brake the vehicle 200a, 200b.

The pneumatic braking system 210 comprises a valve unit 100. The valve unit 100 is further described with reference to Figures 2 to 5.

Figure 2 shows a schematic of a valve unit 100 according to an embodiment of the disclosure. The valve unit 100 of Figure 2 is a valve unit 100 for a pneumatic braking system 210 as described with reference to Figure 1. Figure 2 is described under reference to Figure 2.

A brake pressure input 3, a brake pressure output 4, a vent output 5, an inlet valve 6 configured as a diaphragm valve, an outlet valve 7 configured as a diaphragm valve, and two pilot valves 8, 9 configured as a 3/2-way solenoid valve 101 for each diaphragm valve 6, 7, are arranged in an elongate valve housing 2. The valve housing 2 is divided into a base housing 11 and a housing cover 12 by a separating plane 10a which is largely horizontal in the installation position. The housing cover 12 comprises a control unit 13 with the solenoid valves 8, 9, and an intermediate plate 14 arranged between the base housing 11 and the control unit 13. The control unit 13 and the intermediate plate 14 may be screwed, locked or otherwise connected together. The resulting housing cover 12 may be connected, in particular bolted, uniformly to the base housing 11. It is however also possible that the control unit 13 and intermediate plate 14 are connected separately to the base housing.

The brake pressure input 3 and brake pressure output 4 are arranged largely axially opposite each other in the longitudinal direction 19 of the valve housing 2 and with horizontal orientation, and the vent output 5 is arranged between them in the base housing 11 and oriented vertically downward. The two diaphragm valves 6, 7 are arranged successively in the longitudinal direction 19 in the base housing 11 between the brake pressure input 3 and the brake pressure output 4. Each of the diaphragm valves 6, 7 comprises a membrane 150 being arranged in a common diaphragm plane, largely corresponding to the separating plane 10a between the base housing 11 and the intermediate plate 14.

On the outside of the membranes 150 axially facing the housing cover 12, a respective control chamber 31, 32 is formed, into each of which a control pressure line 33, 34 opens centrally. Via the control pressure lines 33, 34 , the control chambers 31, 32 of the diaphragm valves 6, 7 can be pressurized by the respective assigned pilot valve 8, 9 alternately with a high control pressure, taken from the brake pressure input 3 via a control pressure line 35, or with a low control pressure, corresponding to ambient pressure and taken from the vent output 5 or another point via a control pressure line 36.

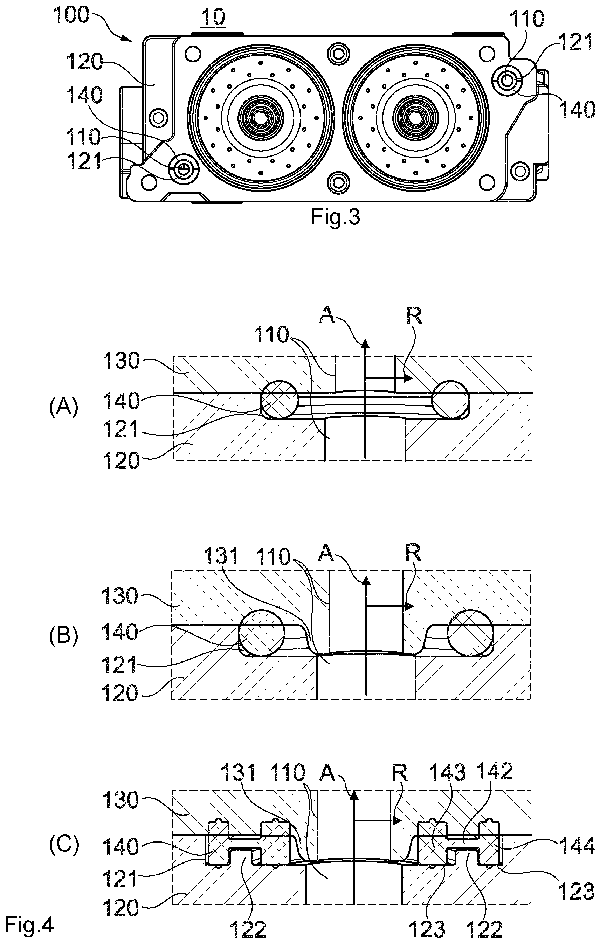

Figure 3 shows a top view of parts of a valve unit 100. A similar valve unit 100 is shown in Figure 2. Figure 3 is described under reference to Figure 2.

The valve unit 100 comprises a first body member 120, a second body member 130 (not shown in Figure 3, see, e.g., the intermediate plate 14 in Figure 2) and a control pressure line 110 comprised by at least the first body member 120 and the second body member 130. I.e., the control pressure line 110 extends through and/or in the first body member 120 and the second body member 130 (see also Figure 4).

The valve unit 100 comprises a sealing member 140, wherein the sealing member 140 is arranged between the first body member 120 and the second body member 130 for sealing the control pressure line 110 and an environment 10 from each other.

Construction space between the first body member 120 and the second body member 130 is limited. An additional and separate environmental sealing, e.g., a gasket, may not be positioned between the first body member 120 and the second body member 130.

Figure 4 shows details of a section of a plurality of valve units 100 according to the prior art and according to embodiments of the disclosure. Figure 4 is divided into three different parts (A), (B), (C). Figure 4 (A) shows a section of the valve unit 100 of Figure 3. Figure 4 (A) is described under reference to Figure 3. Each of Figures 4 (B) und 4 (C) shows a section a valve unit 100 according to an embodiment of the disclosure. Figures 4 (B) and (C) are described under reference to Figures 1 and 2.

In Figure 4 (A), the sealing member 140 is an o-ring. The first body member 120 comprises a recess 121. The sealing member 140 is arranged within the recess 121 and between the first body member 120 and the second body member 130.

The control pressure line 110 defines an axis A and a radial direction R perpendicular to the axis A. The sealing member 140 is not constrained from a movement radially inwardly. Thus, a deformation of the o-ring possible. Further, corrosion and/or corrosion products may penetrate radially inwards between the o-ring and the first body member 130.

In Figure 4 (B), the second body member 130 comprises a collar section 131. I.e., the collar section 131 is formed by the second body member 130. E.g., the collar section 131 is integrally formed with the second body member 130. The collar section 131 projects towards the first body member 120. I.e., the collar section 131 is arranged at a surface (not indicated) of the second body member 130 and projects along the axis A towards the first body member 120. The collar section 131 is arranged concentrically with the control pressure line 110. The collar section 131 is circumferentially around and radially outwardly arranged from the control pressure line 110. The collar section 131 is annularly shaped. In particular, the annular shape also defined the axis A.

The first body member 120 comprises a recess 121. I.e., the first body member 120 comprises a contact surface for contacting the second body member 130, and the recess 121 may be formed as a depression against the contact surface. The recess 121 has a cylindrical shape. The recess 121 is arranged concentrically with and radially outwardly from the control pressure line 110. The sealing member 140 is at least partially arranged within the recess 121.

The collar section 131 is arranged to project into the recess 121. I.e., along the axis A, the collar section 131 and the recess 121 overlap. In the radial direction R, the collar section 131 and the recess 121 overlap and the recess 121 is wider than the collar section 131.

Each of the collar section 131 and the recess 121 is adapted to constrain the arrangement of the sealing member 140. This is achieved by the shape and/or arrangement of the collar section 131 and/or the shape and/or arrangement of the recess 121. The sealing member 140 is arranged, in the radial direction R, between the collar section 131 and a lateral surface of the recess 121. The sealing member 140 is radially outwardly arranged from the collar section 131. Thus, the recess 121 constrains the arrangement of the sealing member 140 radially outwardly. The collar section 121 constrains the arrangement of the sealing member 140 radially inwardly. Thus, a free deformation of the sealing member 140 as an o-ring is not possible.

In Figure 4 (C), the first body member 120 comprises the recess 121 and the second body member 130 comprises the collar section 131 as described with reference to Figure 4 (B). Further, in Figure 4 (C), the first body member 120 comprises a flange 122. The flange 122 has an annular shape and is radially outwardly, circumferentially and concentrically arranged with respect to the control pressure line 110.

The flange 122 is arranged within the recess 121. I.e., the flange 122 projects from a base surface (not indicated) of the recess 121. The flange 122 projects towards the second body member 130. I.e., the flange 122 and the collar section 131 project in opposite directions. The flange 122 is radially outwardly arranged from the collar section 131. The flange 122 is radially inwardly arranged from a lateral surface (not indicated) of the recess 121.

The flange 122 defines at least two sealing member reception portions 123. I.e., in the radial direction R, the flange 122 is arranged between an inner sealing member reception portion 123 and an outer sealing member reception portion 123. The sealing member 140 is arranged within the at least two sealing member reception portions 123. The sealing member 140 comprises an H-shaped cross-section 141 with a bridge section 142. In another embodiment (not shown), the sealing member 140 comprises a C-shaped cross section.

The sealing member 140 is arranged to span the flange 122 with the bridge section 142. The sealing member 140 comprises an inner sealing portion 143 and an outer sealing portion 144 circumferentially around and radially outwardly arranged from the inner sealing portion 143. The inner sealing portion 143 is arranged in the inner sealing member reception portion 123. The outer sealing portion 144 is arranged in the outer sealing member reception portion 123. The inner sealing portion 143 is, in the radial direction R, wider than and the outer sealing portion 144.

The combination of the collar section 131, the recess 121 with the flange 122 and the H-shaped sealing member 140 achieves that a deformation of the sealing member 140 is highly constrained. A penetration of corrosion and/or corrosion production between the sealing member 140 and the first body member 120 is blocked by the flange 122. The sealing member 140 comprises two blocking and/or sealing mechanisms by the inner sealing portion 143 and the outer sealing portion 144. The inner sealing portion 143 and the outer sealing portion 144 are connected via the bridge portion 142 to avoid deformation.

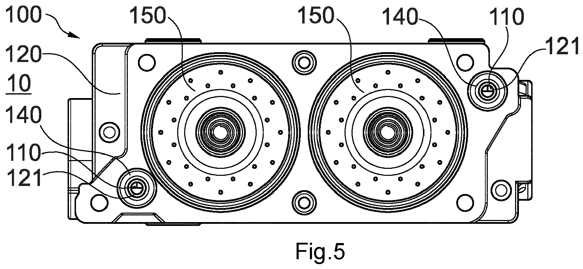

Figure 5 shows a top view of parts of a valve unit 100 to an embodiment of the disclosure. The valve unit 100 of Figure 5 is the valve unit 100 as shown in Figure 4(C). Figure 5 is described under reference to Figure 4 (C).

The valve unit 100 comprises two membranes 150 (see also Figure 2). At least one of the membranes 150 is adapted to be controlled by pressurized air through the control pressure line 110. The valve unit 100 comprises solenoid valves 101 (not shown in Figure 5, see Figure 2) being functionally connected to the control pressure line 110. The valve unit 110 comprises a compact design allowing usage of existing components. The sealing may be achieved by only minor modification of: machining of body members and/or an adaption of the shape of the sealing member 140.

### List of reference signs (Part of the description)

- 2: housing
- 3: brake pressure input
- 4: brake pressure output
- 5: vent output
- 6: inlet valve
- 7: outlet valve
- 8: pilot valve
- 9: pilot valve
- 10: environment
- 10a: separating plane
- 11: base housing
- 12: housing cover
- 13: control unit
- 14: intermediate plate
- 19: longitudinal direction
- 31: control chamber
- 32: control chamber
- 33: control pressure line
- 34: control pressure line

- 100: valve unit
- 101: solenoid valve
- 110: pressure line
- 120: first body member
- 121: recess
- 122: flange
- 123: sealing member reception portions
- 130: second body member
- 131: collar section
- 140: sealing member
- 141: cross-section
- 142: bridge section
- 143: inner sealing portion
- 144: outer sealing portion

- 150: membranes

- 200a: vehicle
- 200b: utility vehicle
- 210: pneumatic braking system

- A: axis
- R: radial direction

## Claims

1. Valve unit (100) for modulating pressure in a pneumatic braking system (210) of a vehicle (200a), in particular utility vehicle (200b); wherein
- the valve unit (100) comprises a first body member (120), a second body member (130) and a control pressure line (110) comprised by at least the first body member (120) and the second body member (130);
- the valve unit (100) comprises a sealing member (140), wherein the sealing member (140) is arranged between the first body member (120) and the second body member (130) for sealing the control pressure line (110) and an environment (10) from each other; and
- the second body member (130) comprises a collar section (131), wherein the collar section (131) projects towards the first body member (120), and the collar section (131) is adapted to constrain the arrangement of the sealing member (140).

2. Valve unit (100) as claimed in claim 1, wherein
- the collar section (131) is annularly shaped; and
- the sealing member (140) is radially outwardly arranged from the collar section (131).

3. Valve unit (100) as claimed in claim 1 or 2, wherein the collar section (131) is circumferentially around and radially outwardly arranged from the control pressure line (110).

4. Valve unit (100) as claimed in claims 2 or 3, wherein
- the first body member (120) comprises a recess (121); and
- the collar section (131) is arranged to project into the recess (121).

5. Valve unit (100) as claimed in any one of the preceding claims, wherein
- the first body member (120) comprises a recess (121); and
- the sealing member (140) is at least partially arranged within the recess (121).

6. Valve unit (100) as claimed in any one of the preceding claims, wherein
- the first body member (120) comprises a flange (122);
- the flange (122) projects towards the second body member (130);
- the flange (122) defines at least two sealing member reception portions (123); and
- the sealing member (140) is arranged within the at least two sealing member reception portions (123).

7. Valve unit (100) as claimed in claim 6, wherein
- the sealing member (140) comprises a C-shaped and/or H-shaped cross-section (141) with a bridge section (142); and
- the sealing member (140) is arranged to span the flange (122) with the bridge section (142).

8. Valve unit (100) as claimed in claim 6 or 7, wherein
- the first body member (120) comprises a recess (121); and
- the flange (122) is arranged within the recess (121).

9. Valve unit (100) as claimed in any one of claims 6 to 8, wherein the flange (122) is radially outwardly arranged from the collar section (131).

10. Valve unit (100) as claimed in any one of the preceding claims, wherein the sealing member (140) comprises an inner sealing portion (143) and an outer sealing portion (144) circumferentially around and radially outwardly arranged from the inner sealing portion (143).

11. Valve unit (100) as claimed in claim 10, wherein the inner sealing portion (143) is, in a radial direction (R), wider than and the outer sealing portion (144).

12. Valve unit (100) as claimed in any one of the preceding claims, wherein
- the valve unit (100) comprises two membranes (150); and
- at least one of the membranes (150) is adapted to be controlled by pressurized air through the control pressure line (110).

13. Valve unit (100) as claimed in any one of the preceding claims, wherein the valve unit (100) comprises a solenoid valve (101) being functionally connected to the control pressure line (110).

14. Pneumatic braking system (210) for a vehicle (200a), in particular utility vehicle (200b), comprising the valve unit (100) as claimed in any one of the preceding claims.

15. Vehicle (200a), in particular utility vehicle (200b), comprising the pneumatic braking system (210) as claimed in claim 14 and/or the valve unit (100) as claimed in any one of claims 1 to 13.
